# EUROPEAN PATENT SPECIFICATION

(11) **EP 0 906 202 B1**
(45) Date of publication and mention of the grant of the patent: **03.04.2002**
(21) Application number: 97922277.5
(22) Date of filing: 07.05.1997
(51) Int. Cl.: B60R 9/058

(54) **LOAD CARRIER**
LASTTRÄGER
PORTE-BAGAGES

(30) Priority: 25.06.1996 SE 9602523
(43) Date of publication of application: 07.04.1999
(73) Proprietor: Industri AB Thule, S-330 33 Hillerstorp (SE)
(72) Inventor: ARVIDSSON, Jan-Ivar, S-330 33 Hillerstorp (SE)
(74) Representative: Wallengren, Yngvar
(86) International application number: SE9700760
(87) International publication number: WO9749575

(56) References cited:
- EP-A- 0 503 310
- DE-A- 3 822 698
- DE-C- 3 614 740
- DE-C- 3 729 641

## Description

### TECHNICAL FIELD

The present invention relates to a load carrier for vehicles and comprising a load carrier strut extending transversely over a vehicle roof, a load carrier foot at each end of the load carrier strut disposed for securing the load carrier on the vehicle, the load carrier foot having a body whose upper portion serves as support for the load carrier strut and at whose lower portion there are disposed engagement devices movable towards and away from one another in the longitudinal direction of the vehicle, the engagement devices being disposed for cooperation with anchorage devices provided on the vehicle for securing the load carrier on the vehicle.

### BACKGROUND ART

A load carrier of the type described by way of introduction is previously known from SE-B-455589. This load carrier has plate-shaped engagement devices which are pivotally connected to the load carrier foot so that, by pivoting, they can be caused to move in the longitudinal direction of the vehicle. Hereby, the engagement devices are movable into and away from engagement positions where they cooperate with anchorage devices disposed on the vehicle body in the form of laterally projecting pins.

The construction according to this patent specification functions satisfactorily, but includes a large number of different parts, for which reason it is complicated and expensive in manufacture.

A closely related construction is also shown in DE-C-3614740. The construction according to this publication includes a scissors shaped device in the load carrier foot, with clamping jaws which grasp about an approximately T-shaped anchorage fitting provided in a countersunk gutter in the vehicle roof. This construction also includes a large number of small parts, for which reason it is complicated, fragile and expensive.

### PROBLEM STRUCTURE

The present invention has for its object to design the load carrier disclosed by way of introduction such that it is simple and economical to manufacture and also offers an extremely reliable and stable anchorage in the vehicle. The present invention further has for its object to realise a load carrier which is simple and convenient to operate.

### SOLUTION

The objects forming the basis of the present invention will be attained if the load carrier disclosed by way of introduction is characterized in that the engagement devices are movable by deformations in the body of the load carrier foot.

In a first embodiment, it moreover applies according to the invention that the anchorage devices include pins projecting laterally from the vehicle, and that the engagement devices are insertible between two such pins and are expandable away from one another into engagement with the pins.

In a second embodiment, it further applies according to the invention that the anchorage devices include pins projecting laterally from the vehicle, and that the engagement devices are depressible on the outsides of two pins and movable towards one another into engagement with the pins.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is an exploded view of the subject matter of the present invention;

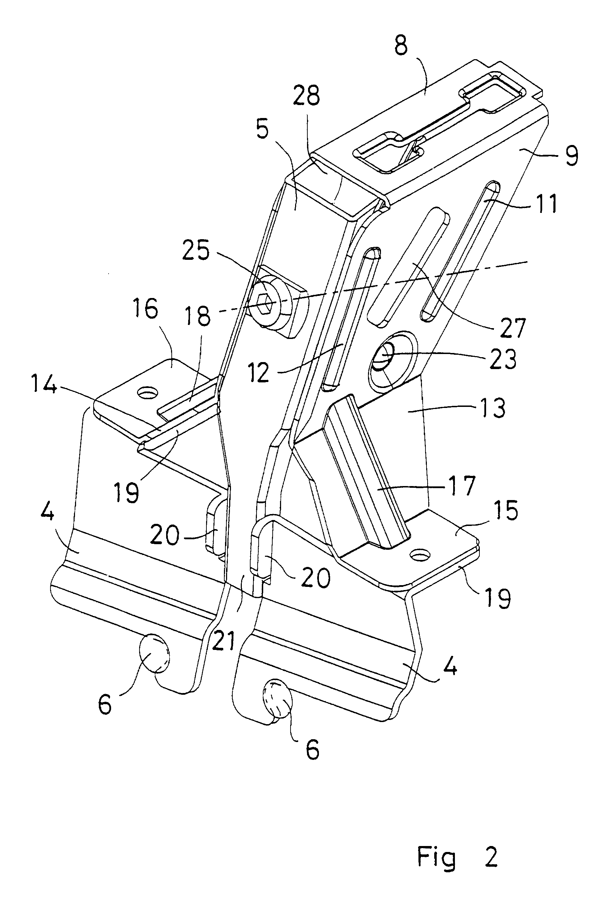

- Fig. 2: is a perspective view of the subject matter of the present invention; and

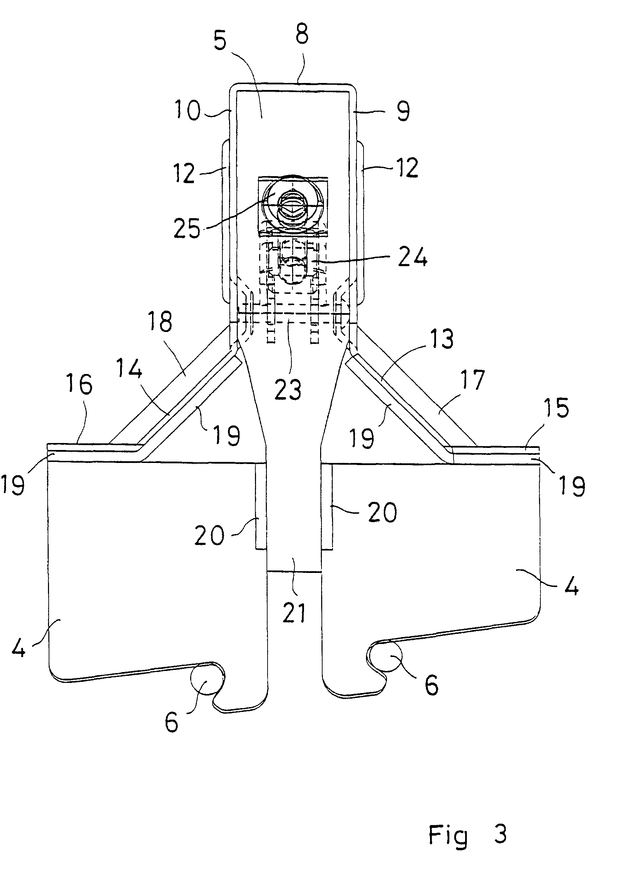

- Fig. 3: is a side elevation of the subject matter of the present invention, seen in the longitudinal direction of its load carrier strut.

### DESCRIPTION OF PREFERRED EMBODIMENTS

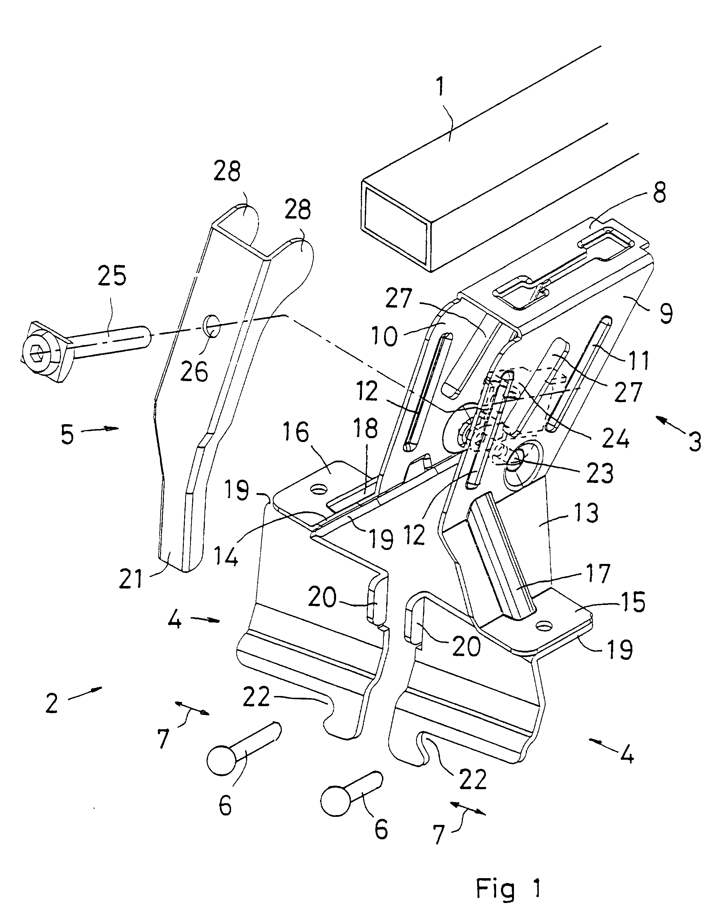

It will be apparent from Fig. 1 that the subject matter of the present invention comprises a load carrier strut 1 which, in its position of use, extends transversely over a vehicle roof a slight distance above the roof. The load carrier strut has load carrier feet 2 disposed at each end for securing the load carrier on the vehicle, the feet each comprising a body 3, engagement devices 4 and a blocking device 5. The engagement devices 4 are movable towards and away from one another approximately in the longitudinal direction of the vehicle and are movable to engagement positions where they cooperate with anchorage devices 6 which are fixedly disposed on the vehicle and which, for example, may be designed as pins projecting laterally from the vehicle body. The anchorage devices, which do not constitute a part of the present invention, are as a rule placed in a tight space in behind the door of the vehicle or in a recess or groove provided in the roof of the vehicle. To be able to extend into a tight space where the anchorage devices 6 are located, the engagement devices 4 are made of sheet material and are substantially plate shaped standing on end, and are disposed approximately parallel with the longitudinal direction of the vehicle. The engagement devices 4 are movable in accordance with the arrows 7 in Fig. 1.

The body 3 is preferably of one piece manufacture in sheet material and has, in its upper end, a support portion 8 for the load carrier strut 1. From this, two substantially mutually parallel walls 9 and 10 extend downwards, the one being turned to face forwards in the direction of travel of the vehicle, while the other is turned to face rearwards in relation to the same direction. The walls 9 and 10 have rigidification ribs 11 and 12 to increase mechanical strength. The walls 9 and 10 have, at their lower ends, outwardly angled portions 13 and 14, respectively, which diverge outwards from one another in a direction from above and downwards. At the lower and outer ends of the outwardly angled portions, the walls merge into platform-like portions 15 and 16, respectively, which are substantially parallel with the vehicle roof in the region of the load carrier feet. Rigidification ribs 17 and 18 are also provided on the outwardly angled portions 13 and 14, respectively.

The engagement devices 4 have anchorage portions 19 which abut against the undersides of the platform-like portions 15 and 16 and which extend up along the insides of the outwardly angled portions 13 and 14. The connection between the engagement devices 4 and the platform-like portions and the outwardly angled portions is substantially rigid and may be realised, for example, by riveting, gluing, welding or similar union. Possibly, the body 3 may also be of one single piece manufacture such that, as a result, the engagement devices are produced out of the same material piece as the body.

According to the present invention, the engagement devices 4 are movable in the longitudinal direction of the vehicle away from one another and towards one another in accordance with the arrows 7 in order to be able to be brought into engagement with the anchorage devices 6. The lower plate shaped portions of the engagement devices are completely rigid in this direction of movement. In addition, the anchorage portions 19 of the engagement devices 4 are rigidly connected to the platform-like portions 15 and 16 and also to the outwardly angled portions 13 and 14. On the other hand, the body 3 is deformable by flexural or spring movements in its material. As a result of the presence of the rigidification ribs 11, 12 and 17, 18, the major deformation zone in the body lies at its upper portion, in that the material in body is resilient and gives way on loading.

As was mentioned above, the load carrier foot 2 includes a blocking device 5 which, in a blocking position, is operative to prevent the movements of the engagement devices 4 away from their engagement positions with the anchorage devices 6. The blocking device 5 has an upper portion which is at least partly insertible between the two substantially parallel walls 9 and 10 of the body 3 so that abutment takes place between the inner surfaces of the walls and the blocking device. In this position, the blocking device prevents the walls 9 and 10 from being urged towards one another so that the engagement devices 4 thereby also move towards one another. In its blocking position, the blocking device also has a generally rigidifying effect on the load carrier foot so that its ability to take up loads, for example when the vehicle decelerates or brakes, is considerably improved.

The engagement devices 4 have projecting lugs 20 or are rigidly connected to such lugs. A lower end portion 21 of the blocking device 5 is insertible between these lugs in order to abut against the edges of the engagement devices 4 and possibly also against the lugs 20, whereby it will be further ensured that the engagement devices 4 cannot escape from their engagement positions with the anchorage devices 6. In the engagement positions, the anchorage devices are at least partly accommodated in preferably complementarily designed recesses 22 in the engagement devices 4.

The projecting lugs 20 also serve as finger grips when the engagement devices 4 are to be moved towards and possibly also away from one another.

In a second embodiment of the present invention, the engagement devices 4 grasp about the anchorage devices 6 on their outsides. In this embodiment, the blocking device 5 preferably lies on the outside of the walls 9 and 10 and prevents them from being separated from one another. Correspondingly, the lower end portion 21 of the blocking device 5 (which is approximately U-shaped in cross section) lies on the outsides of the lugs 20 so as to provide a further guarantee that the engagement devices 4 cannot move away from one another out of their engagement positions. Also in this embodiment, the upper portion of the blocking device may possibly be located in between the walls 9 and 10.

A shaft 23 extends between the walls 9 and 10, the shaft being disposed so as not to prevent minor movements (one or a few mm) of the walls towards and away from one another. The shaft 23 serves for securing a nut 24 such that the nut is pivotal about the shaft and has the centre axis of its threading transversely of the shaft and located distance therefrom. The nut 24 is intended for accommodating a screw 25 which extends through an aperture 26 in the blocking device 5. By tightening the screw 25, the blocking device is drawn in between the two walls 9 and 10, and also has its lower end portion 21 drawn in between the engagement devices 4. On tightening, the nut 24 also strives however to rotate about the shaft 23, for which reason a force is generated which strives to rotate the nut in relation to the screw in such a manner that the longitudinal axes of the screw and the nut make an angle with one another. On tightening of the screw 25, the friction in the nut will, therefore, gradually increase so that the screw is duly locked in the nut.

For supporting the blocking device 5, the walls 9 and 10 have, in their upper portions, inwardly directed (towards one another) support walls 27 against which abut upper support lugs 28 on the blocking device.

As an alternative to the clamping of the blocking device 5 with the aid of the screw 25 and the nut 24, an eccenter mechanism may instead be employed.

The present invention may be modified without departing from the scope of the appended Claims.

## Claims

1. A load carrier for vehicles comprising a load carrier strut (1) extending transversely over a vehicle roof; a load carrier foot (2) at each end of the load carrier strut disposed for securing the load carrier on the vehicle, the load carrier foot having a body (3) whose upper portion (8) serves as a support for the load carrier strut (1) and at whose lower portion there are disposed engagement devices (4) movable towards and away from one another in the longitudinal direction of the vehicle, the engagement devices being disposed for cooperation with anchorage devices (6) provided on the vehicle for securing the load carrier on the vehicle, **characterized in that** the engagement devices (4) are movable by deformations in the body (3) of the load carrier foot (2) by flexural or spring movements in its material.

2. The load carrier as claimed in Claim 1, **characterized in that** the anchorage devices (6) include pins projecting laterally from the vehicle; and that the engagement devices (4) are insertible between two such pins and are expandable from one another (7) into engagement with the pins.

3. The load carrier as claimed in Claim 1, **characterized in that** the anchorage devices (6) include pins projecting laterally from the vehicle; and that the engagement devices (4) are depressible on the outsides of two such pins and are movable towards one another (7) into engagement with the pins.

4. The load carrier as claimed in any of Claims 1 to 3, **characterized in that** the engagement devices (4) have recesses (22) in which the anchorage devices (6) are at least partially accommodatable in their positions securing the load carrier on the vehicle.

5. The load carrier as claimed in any of Claims 1 to 4, **characterized in that** the major deformation zones of the body (3) are located at an upper portion (8) of the body.

6. The load carrier as claimed in any of Claims 1 to 5, **characterized in that** the engagement devices (4) are pretensioned towards their positions securing the load carrier on the vehicle.

7. The load carrier as claimed in any of Claims 1 to 6, **characterized by** a blocking device (5) which, in a blocking position, is operative to block the movements of the engagement devices (4) in the positions securing the load carrier on the vehicle.

8. The load carrier as claimed in Claim 7, **characterized in that** the body (3) has two mutually spaced apart walls (9,10) which, at upper portion (8) of the body, are united via a support portion for the load carrier strut (1); and that the blocking device (5) in the blocking position is at least partly located between, and has movement-preventing cooperation with the walls.

9. The load carrier as claimed in any of Claims 7 or 8, **characterized in that** the blocking device (5) is insertible between the engagement devices (4) in order thereby to block the movement of the engagement devices towards one another.

10. The load carrier as claimed in any of Claims 8 or 9, **characterized in that** a shaft (23) extends between the walls (9, 10) in which shaft a nut (24) is pivotally secured such that the centre line of the thread of the nut is transversely directed to and located a distance from the shaft; and that a screw (25) accommodated in the nut extends through the blocking device (5) in order, on tightening, to transfer the blocking device to its blocking position.

11. The load carrier as claimed in any of Claims 1 to 10, **characterized in that** the engagement devices (4) are substantially plate-shaped.

## Patentansprüche

1. Lastträger für Fahrzeuge mit einer Lastträgerstrebe (1), die sich quer über ein Fahrzeugdach erstreckt; einem Lastträgerfuß (2) an jedem Ende der Lastträgerstrebe, die zum Sichern des Lastträgers auf dem Fahrzeug angeordnet ist, wobei der Lastträgerfuß einen Körper (3) aufweist, dessen oberer Abschnitt (8) als Stütze für die Lastträgerstrebe (1) dient und an dessen unterem Abschnitt Eingriffsvorrichtungen (4) vorgesehen sind, die aufeinander zu und voneinander weg in Längsrichtung des Fahrzeugs bewegt werden können, wobei die Eingriffsvorrichtungen zur Kooperation mit Verankerungsvorrichtungen (6) angeordnet sind, die an dem Fahrzeug vorgesehen sind, um den Lastträger an dem Fahrzeug zu sichern, **dadurch gekennzeichnet, daß** die Eingriffsvorrichtungen (4) durch Verformungen in dem Körper (3) des Lastträgerfußes (2) durch Biege- oder Federbewegungen in seinem Material bewegbar sind.

2. Lastträger nach Anspruch 1, **dadurch gekennzeichnet, daß** die Verankerungsvorrichtungen (6) Stifte aufweisen, die seitlich von dem Fahrzeug vorstehen; und daß die Eingriffsvorrichtungen (4) zwischen zwei solchen Stiften einfügbar sind und voneinander weg (7) in Eingriff mit den Stiften spannbar sind.

3. Lastträger nach Anspruch 1, **dadurch gekennzeichnet, daß** die Verankerungsvorrichtungen (6) Stifte aufweisen, die seitlich von dem Fahrzeug vorstehen; und daß die Eingriffsvorrichtungen (4) auf den Außenseiten zweier solcher Stifte eingedrückt werden können und aufeinander zu (7) in Eingriff mit den Stiften bewegbar sind.

4. Lastträger nach einem der Ansprüche 1 bis 3, **dadurch gekennzeichnet, daß** die Eingriffsvorrichtungen (4) Aussparungen (22) haben, in welchen die Verankerungsvorrichtungen (6) zumindest teilweise in ihren den Lastträger auf dem Fahrzeug sichernden Positionen aufgenommen werden können.

5. Lastträger nach einem der Ansprüche 1 bis 4, **dadurch gekennzeichnet, daß** die Haupt-Verformungszonen des Körpers (3) an einem oberen Abschnitt (8) des Körpers angeordnet sind.

6. Lastträger nach einem der Ansprüche 1 bis 5, **dadurch gekennzeichnet, daß** die Eingriffsvorrichtungen (4) in ihre Positionen vorgespannt sind, die den Lastträger auf dem Fahrzeug sichern.

7. Lastträger nach einem der Ansprüche 1 bis 6, **gekennzeichnet durch** eine Blockiervorrichtung (5), welche in einer Blockierposition so wirkt, daß sie die Bewegungen der Eingriffsvorrichtungen (4) in den Positionen blockiert, die den Lastträger an dem Fahrzeug sichern.

8. Lastträger nach Anspruch 7, **dadurch gekennzeichnet, daß** der Körper (3) zwei voneinander beabstandete Wände (8,10) aufweist, welche an einem oberen Abschnitt (8) des Körpers, über einen Stützabschnitt für die Lastträgerstrebe (1) verbunden sind; und daß die Blockiervorrichtung (5) in der Blockierposition zumindest teilweise dazwischen angeordnet ist und mit den Wänden derart zusammenwirkt, daß eine Bewegung verhindert wird.

9. Lastträger nach einem der Ansprüche 7 oder 8, **dadurch gekennzeichnet, daß** die Blockiervorrichtung (5) zwischen die Eingriffsvorrichtungen (4) einführbar ist, um hierdurch die Bewegung der Eingriffsvorrichtungen aufeinander zu zu blockieren.

10. Lastträger nach einem der Ansprüche 8 oder 9, **dadurch gekennzeichnet, daß** eine Welle (23) sich zwischen den Wänden (9,10) erstreckt, in welcher Welle eine Mutter (24) schwenkbar befestigt ist, so daß die Mittellinie des Gewindes der Mutter quer zur Welle und in einem Abstand von dieser ausgerichtet ist; und daß eine Schraube (25), die in der Mutter aufgenommen ist, sich durch die Blockiervorrichtung (5) erstreckt, um, beim Anziehen, die Blockiervorrichtung in ihre Blockierposition zu überführen.

11. Lastträger nach einem der Ansprüche 1 bis 10, **dadurch gekennzeichnet, daß** die Eingriffsvorrichtungen (4) im wesentlichen plattenförmig sind.

## Revendications

1. Porte-charge pour véhicules, comprenant une barre de porte-charge (1) qui s'étend transversalement sur un toit de véhicule et un pied de porte charge (2) à chaque extrémité de la barre de porte-charge, prévu pour fixer le porte-charge sur le véhicule, le pied de porte-charge ayant un corps (3) dont la partie supérieure (8) sert d'appui à la barre de porte-charge (1) et à la partie inférieure duquel il est prévu des dispositifs de couplage (4) qu'on peut rapprocher et éloigner l'un de l'autre dans la direction longitudinale du véhicule, les dispositifs de couplage étant disposés pour coopération avec des dispositifs d'ancrage (6) prévus sur le véhicule afin de fixer le porte-charge sur le véhicule, **caractérisé en ce que** les dispositifs de couplage (4) sont déplaçables par des déformations du corps (3) du pied de porte-charge (2) du fait de mouvements de flexion ou d'élasticité dans sa matière.

2. Porte-charge selon la revendication 1, **caractérisé en ce que** les dispositifs d'ancrage (6) comprennent des broches s'étendant latéralement à partir du véhicule ; et **en ce que** les dispositifs de couplage (4) peuvent être insérés entre deux de ces broches et ils peuvent être écartés l'un de l'autre (7) pour les amener en prise avec les broches.

3. Porte-charge selon la revendication 1, **caractérisé en ce que** les dispositifs d'ancrage (6) comprennent des broches s'étendant latéralement à partir du véhicule ; et **en ce que** les dispositifs de couplage (4) peuvent être pressés sur les côtés extérieurs de deux de ces broches et ils peuvent être rapprochés l'un de l'autre (7) pour venir en prise avec les broches.

4. Porte-charge selon une quelconque des revendications 1 à 3, **caractérisé en ce que** les dispositifs de couplage (4) comportent des évidements (22) dans lesquels les dispositifs d'ancrage (6) peuvent se loger au moins en partie dans leurs positions de fixation du porte-charge sur le véhicule.

5. Porte-charge selon une quelconque des revendications 1 à 4, **caractérisé en ce que** les zones de déformation majeure du corps (3) sont situées dans une partie supérieure (8) du corps.

6. Porte-charge selon une quelconque des revendications 1 à 5, **caractérisé en ce que** les dispositifs de couplage (4) sont préalablement mis en tension vers leurs positions de fixation du porte-charge sur le véhicule.

7. Porte-charge selon une quelconque des revendications 1 à 6, **caractérisé par** un dispositif de blocage (5) qui agit, dans une position de blocage, pour bloquer les mouvements des dispositifs de couplage (4) dans les positions de fixation du porte-charge sur le véhicule.

8. Porte-charge selon la revendication 7, **caractérisé en ce que** le corps (3) comprend deux parois mutuellement espacées (9, 10) qui sont reliées, à la partie supérieure (8) du corps, par une partie d'appui pour la barre de porte-charge (1) ; et **en ce que** le dispositif de blocage (5) dans la position de blocage est au moins en partie situé entre les parois et coopère avec celles-ci pour empêcher un mouvement.

9. Porte-charge selon une quelconque des revendications 7 ou 8, **caractérisé en ce que** le dispositif de blocage (5) peut être inséré entre les dispositifs de couplage (4) afin de bloquer le mouvement des dispositifs de couplage l'un vers l'autre.

10. Porte-charge selon une quelconque des revendications 8 ou 9, **caractérisé en ce qu'**une tige (23) s'étend entre les parois (9, 10) et un écrou (24) est fixé de façon pivotante sur la dite tige de sorte que l'axe central du filetage de l'écrou est dirigé transversalement à la tige et situé à distance de celle-ci ; et **en ce qu'**une vis (25) reçue dans l'écrou s'étend à travers le dispositif de blocage (5) afin, lors du serrage, d'amener le dispositif de blocage à sa position de blocage.

11. Porte-charge selon une quelconque des revendications 1 à 10, **caractérisé en ce que** les dispositifs de couplage (4) sont sensiblement en forme de plaque.
